# FASCICULE DE BREVET EUROPEEN

(11) **EP 1 765 688 B1**
(45) Date de publication et mention de la délivrance du brevet: **15.09.2010**
(21) Numéro de dépôt: 05775332.9
(22) Date de dépôt: 09.06.2005
(51) Int. Cl.: B65D 53/04, B32B 27/06, B32B 5/18

(54) **JOINTS D"ETANCHEITE EN MATERIAU MULTICOUCHE POUR MOYEN DE BOUCHAGE, TYPIQUEMENT POUR UNE CAPSULE DE BOUCHAGE**
DICHTUNG AUS MEHRSCHICHTIGEM MATERIAL FÜR DICHTMITTEL, INSBESONDERE DICHTUNGSKAPSEL
SEALS MADE OF A MULTI-LAYERED MATERIAL FOR SEALING MEANS, PARTICULARLY A SEALING CAPSULE

(30) Priorité: 11.06.2004 FR 0406336
(43) Date de publication de la demande: 28.03.2007
(73) Titulaire: Alcan Packaging Capsules, 75218 Paris cedex 16 (FR)
(72) Inventeur: GRANGER, Jacques, F-33350 Sainte-Terre (FR)
(74) Mandataire: Fénot, Dominique
(86) Numéro de dépôt international: PCT/FR2005/001426
(87) Numéro de publication internationale: WO 2006/000706

(56) Documents cités:
- EP-A- 0 926 078
- WO-A-96/05055
- US-A1- 2004 081 780

## Description

### DOMAINE DE L'INVENTION

L'invention concerne le domaine des joints associés aux moyens de bouchage obturant des récipients, typiquement le domaine des joints de bouchons, de capuchons ou de capsules de bouchage.

### ETAT DE LA TECHNIQUE

On connaît un joint en matériau multicouche comme décrit dans EP 0 970 893 A1 dans lequel on utilise de l'EVOH comme matériau barrière.

On connaît aussi des joints comprenant du PVDC comme matériau barrière.

Ainsi, par exemple, on connaît un joint en matériau multicouche ayant la structure suivante :
LDPE / EVA / PVDC / EVA / LDPE / EPE / LDPE / EVA / PVDC / EVA / LDPE Dans cette structure, utilisée notamment comme joint de capsule de bouchage, l'EVA sert de couche adhésive pour faire adhérer le LDPE au PVDC, et l'EPE désigne un PE expansé.

WO 96/05055 A décrit un joint d'étanchéité comprenant une couche de base, par exemple polyester, une couche barrière de SiOₓ, AlOₓ ou de carbone amorphe et une couche de polyoléfine.

### PROBLEMES POSES

Les problèmes posés sont de plusieurs ordres :
- d'une part, pour être économiques, les joints sont typiquement formés à partir de matériau en bande, typiquement par découpage à l'emporte-pièce, de sorte qu'une part non négligeable dudit matériau en bande, en pratique typiquement de l'ordre de 20% dans le cas de joints ronds découpés de manière "jointive", forme un squelette ou des chutes qui sont perdues. Or, lorsque le matériau en bande destiné à former ces joints comprend une matière comprenant du chlore, typiquement du PVDC, le recyclage du squelette, et éventuellement le recyclage des joints en fin de vie pose des problèmes, en particulier des problèmes de corrosion par formation d'acide chlorhydrique,
- de plus, la présence de PVDC ne permet pas de conserver un joint de structure homogène,
- d'autre part, la demanderesse ayant procédé à des essais de bouchage de bouteilles de vin de garde à l'aide de capsules de bouchage dotées de joints, alors que traditionnellement, les bouteilles de vins de garde sont fermées par des bouchons de liège, elle a observé que, dans de nombreux cas, le joint utilisé dans des capsules de bouchage de vin de garde interférait avec l'évolution du vin au cours du temps, c'est-à-dire son vieillissement. Par ailleurs, la demanderesse a trouvé que les joints comprenant de l'EVOH, bien qu'aptes à former une barrière a priori élevée ou adaptée au vieillissement du vin, n'étaient pas utilisables car instables au stockage,
- en outre, l'invention vise à obtenir des joints présentant, à niveau de barrière comparable, un coût de production moindre,
- enfin, la demanderesse a observé que les capsules dotées de joints standards n'étaient pas nécessairement adaptées, en termes de niveau de barrière à l'oxygène ou à la vapeur d'eau, pour la conservation de vins, chaque vin nécessitant un certain niveau de barrière, ou une barrière située dans une plage de valeurs donnée. En effet, le vieillissement de certains vins implique un échange contrôlé d'atmosphère, et donc un niveau de barrière prédéterminé.

Les joints selon l'invention visent à résoudre ces problèmes, tout en assurant par ailleurs l'étanchéité requise, c'est-à-dire une absence de fuite liquide.

### DESCRIPTION DE L'INVENTION

Selon l'invention, le joint d'étanchéité en matériau multicouche destiné à être utilisé dans un moyen de bouchage d'un récipient devant contenir un produit alimentaire, ledit récipient étant typiquement une bouteille destinée à contenir une boisson alcoolisée et ledit moyen de bouchage étant typiquement une capsule de bouchage, comprend une couche C en matière thermoplastique de masse spécifique allant de 200 à 500 kg/m³, et une couche B formant barrière à l'oxygène.

Dans ce joint :
a) ladite couche B forme ou comprend un dépôt de matière anorganique,
b) ledit joint comprend une couche S formant un support de ladite couche B, ladite couche support S étant ou non au contact de ladite couche C, de manière à avoir une structure comprenant soit une succession de couches C, B et S, structure représentée symboliquement par C / B / S dans le cas de couches C, B et S adjacentes, la couche S étant alors destinée à être au contact dudit produit alimentaire, soit une succession de couches C, S et B, structure représentée symboliquement par C / S / B dans le cas de couches C, S et B adjacentes, la couche B étant alors destinée à être au contact dudit produit alimentaire.

Les joints selon l'invention résolvent les problèmes posés, tout en assurant par ailleurs l'étanchéité requise, c'est-à-dire une absence de fuite liquide.

En effet, ces joints sont formés à partir de matériau en bande exempt de chlore, la couche barrière B ne comprenant pas de PVDC, de sorte que le recyclage du squelette, et éventuellement le recyclage des joints en fin de vie ne pose pas de problème, en particulier ne pose pas de problème de corrosion par formation d'acide chlorhydrique. De plus, la couche barrière B est une couche qui, en dépit de sa de faible épaisseur relative par rapport à la couche C, présente un niveau de barrière élevé, de sorte que le recyclage du squelette dans la couche C peut se faire sans inconvénients. La couche C est typiquement au moins 1000 fois plus épaisse que la couche barrière B, et même parfois 10.000 fois plus épaisse que la couche barrière B.

La demanderesse ayant procédé à des essais de bouchage de bouteilles de vin de garde à l'aide de capsules de bouchage dotées de joints selon l'invention assuraient un vieillissement correct des vins, sans modification des propriétés du joint au cours du temps, et sans rencontrer par ailleurs les problèmes de bouchons qui peuvent surgir plus ou moins aléatoirement avec les bouchons de liège traditionnels.

L'invention permet en outre d'obtenir toute une série de joints présentant un coût de production moindre, notamment par la possibilité d'avoir une structure multicouche plus simple à niveau de barrière comparable.

Enfin, l'invention permet d'obtenir une gamme de joints en termes de niveau de barrière à l'oxygène ou à la vapeur d'eau, de manière à pouvoir adapter le niveau de barrière à chaque type de vin, en vue de son vieillissement.

### DESCRIPTION DES FIGURES

Toutes les figures sont relatives à l'invention.

La figure la est une vue en coupe d'une capsule de bouchage (4) dotée d'un joint (1, 1') multicouche selon l'invention. Cette capsule (4) comprend un insert fileté (40) et une coque métallique (41).

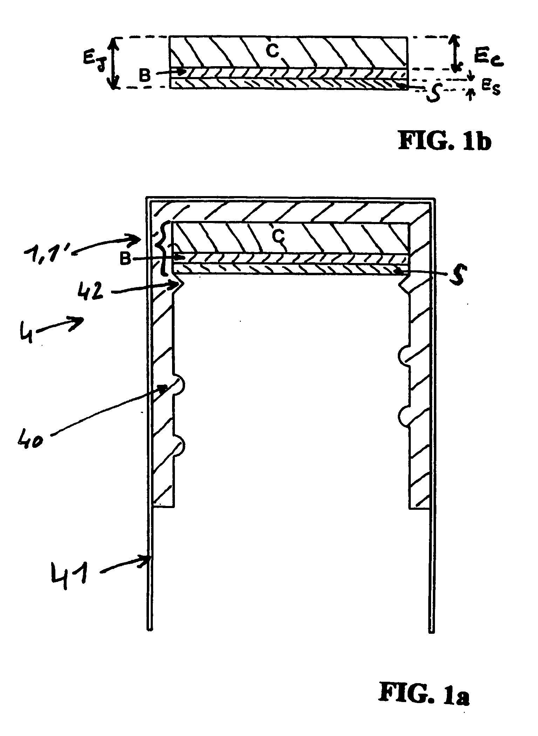

La structure du joint multicouche (1,1') de la figure 1a a été représenté sur la figure 1b et correspond à la représentation symbolique C / B / S, correspondant à la succession de couches A, B et S, S étant la couche au contact du liquide.

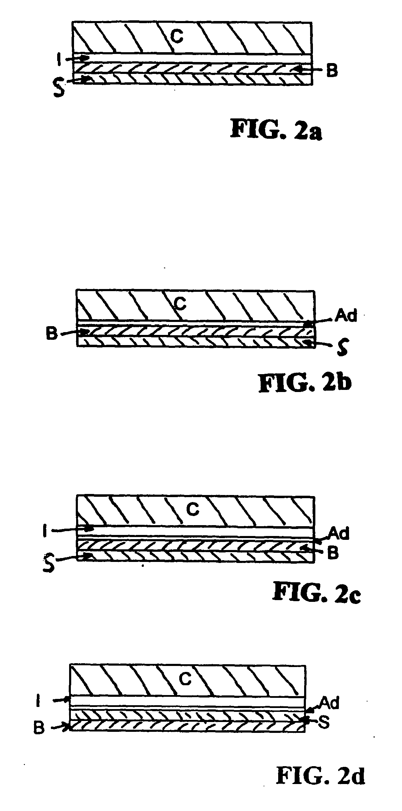

Les figures 2a à 8d sont analogues à la figure 1b et illustrent une variété de structures de joints multicouches (1, 1', 1") selon l'invention. Le tableau qui suit indique pour chaque figure la structure du joint multicouches :

| N° de figure | Représentation symbolique de la structure multicouche |
|---|---|
| 2a | C/I/B/S |
| 2b | C/Ad/B/S |
| 2c | C/I/Ad/B/S |
| 2d | C/I/Ad/S/B |
| 3a | S/B/C'/B/S |
| 3b | S/B/I/C'/I/B/S |
| 3c | S/B/C'/Ad/B/S |
| 3d | S/B/Ad/I/C'/I/Ad/B/S |
| 3e | S/B/Ad/I/C'/I/B/S |
| 3f | S/B/C'/I/Ad/B/S |
| 4a | C/M/B/S |
| 4b | C/Ad/M/B/S |
| 4c | C/Ad/M/Ad'/B/S |
| 4d | C/M/Ad/B/S |
| 5a | S/B/M/C'/M/B/S |
| 5b | S/B/C'/I/M/B/S |
| 5c | S/B/Ad/M/C'/M/Ad/B/S |
| 5d | S/B/Ad/M/C'/I/B/S |
| 5e | S/B/C'/M/Ad/B/S |
| 5f | S/B/C'/Ad'/M/Ad/B/S |
| 6a | S/B/C'/B/S/M |
| 6b | S/B/I/C'/I/B/S/M |
| 6c | S/B/C'/Ad/B/SlM |
| 6d | S/B/Ad/I/C'/Ad'/I/B/S/M |
| 6e | M/S/B/Ad/I/C'/I/B/S/M |
| 6f | B/S/C'/Ad/M |
| 7a | M'ou S/B/C'/B/M'ou S |
| 7b | M'ou S/B/I/C'/I/B/M'ouS |
| 7c | M'ou S/B/Ad/C'/Ad/M' |
| 7d | M'ou S/B/Ad'/I/C/I/Ad/B/M' ou S |
| 7e | S'/M'/B/Ad/C'/Ad/B/M'/S' |
| 8a | M'ou S/B/Ad/C'/Ad/B/M'ou S/V ou P |
| 8b | V ou P/M' ou S/B/Ad/C'/Ad/B/M' ou S/V ou P |
| 8c | V ou P/B/S/Ad/C'/Ad/S/B/V ou P |
| 8d | V ou P/M/Ad'/B/S/Ad/C'/S/B/Ad'/M/V ou P |

Sur les figures 2a à 8d, seules les couches C, C', B et S ont été hachurées. Les autres couches I, Ad, Ad', M, etc... n'ont pas été hachurées pour des raisons de clarté.

La figure 9 est une représentation schématique de la fabrication d'un matériau multicouche en bande (2) du type "C/B/E", avec une couche C (20) formée par extrusion sur un film bicouche B/E en bande (23) approvisionné en bobine (24), ainsi que la fabrication de joints correspondants (1, 1', 1") par découpe dans la bande (2) de matériau multicouche C/B/E ainsi formée, le squelette (3) étant ensuite renvoyé à la trémie d'alimentation (22) de l'extrudeuse (21) et ainsi recyclé dans la couche C.

La figure 10a est une vue de dessus d'une portion de bande de matériau multicouche (2) après découpe de joints ronds (1, 1'), dite "squelette" (3).

La figure 10b est une vue en coupe verticale d'un joint plan (1, 1') de type C / S / B.

La figure 10c est une vue en coupe verticale d'un joint thermoformé (1, 1 ") de type C / S / B.

### DESCRIPTION DETAILLEE DE L'INVENTION

Selon l'invention, ladite couche barrière B peut former ou comprendre un dépôt anorganique constitué par un dépôt de SiOₓ.

Selon une autre modalité de l'invention, ladite couche barrière B peut former ou comprendre un dépôt d'oxyde d'aluminium.

Selon une autre modalité, ladite couche barrière B peut former ou comprendre un dépôt de carbone.

Selon une autre modalité de l'invention, ladite couche barrière B peut former ou comprendre une dispersion nanoparticulaire de feuillets exfoliés d'une argile du type phyllosilicate.

Quelle que soit la modalité choisie, ladite couche barrière B peut être d'épaisseur choisie ou de teneur choisie en ladite matière anorganique, de manière à avoir un joint de perméabilité à l'oxygène inférieure à 5 cm³/m²/j.

Ladite couche barrière B peut être d'épaisseur choisie ou de teneur choisie en ladite matière anorganique, de manière à avoir un joint de perméabilité à l'oxygène allant de 5 à 10 cm³/m²/j.

Ladite couche barrière B peut être d'épaisseur choisie ou de teneur choisie en ladite matière anorganique, de manière à avoir un joint de perméabilité à l'oxygène allant de 10 à 20 cm³/m²/j.

Ladite couche barrière B peut être d'épaisseur choisie ou de teneur choisie en ladite matière anorganique ou comprendre ladite matière anorganique, de manière à avoir un joint de perméabilité à l'oxygène allant de 20 à 40 cm³/m²/j.

Ladite couche barrière B peut être d'épaisseur choisie ou de teneur choisie en ladite matière anorganique, de manière à avoir un joint de perméabilité à l'oxygène supérieure à 40 cm³/m²/j et allant typiquement jusqu'à 80 cm³/m²/j.

En effet, il importe de disposer d'une gamme de joints ayant des plages de perméabilité à l'oxygène distinctes, dans la mesure où chaque type de vin peut exiger, pour une conservation et un vieillissement optimum un joint qui assure un niveau d'échange gazeux avec l'atmosphère extérieure plus ou moins important.

D'une manière générale, le niveau d'échange gazeux sera moindre pour les vins blancs que pour les vins rouges.

Selon l'invention, ladite couche barrière B peut avoir une épaisseur allant de 10 nm à 250 nm quand ladite matière anorganique est choisie parmi un dépôt de SiOₓ, ou un dépôt d'oxyde d'aluminium ou un dépôt de carbone.

Ladite couche barrière B peut également être formée par une dispersion de nanoparticules exfoliées dans une résine ou une matière plastique d'épaisseur allant de 1 µm à 30 µm.

Selon l'invention, ladite couche C peut présenter une épaisseur E_{C} allant typiquement de 0,5 mm à 2,5 mm.

Ladite couche C peut être formée en un matériau M_{C} constitué par ou comprenant une couche de polyoléfine expansée, typiquement de PE expansé ou EPE.

Ladite couche C peut être constituée par ou comprendre une couche de matière thermoplastique de masse spécifique allant de 200 à 500 kg/m³.

Typiquement, ladite couche C peut être une couche de polyoléfine expansée ou cellulaire, typiquement une couche de PE expansé ou EPE, de masse spécifique allant de 350 kg/m³ à 450 kg/m³.

Ladite couche C peut être constituée par ou comprendre une couche d'élastomère, typiquement en SEBS ou en silicone.

Selon l'invention, ladite couche support S peut être formée en un matériau M_{S} choisi parmi une polyoléfine ou un PET, typiquement un PP, d'épaisseur E_{S} allant typiquement de 10 µm à 50 µm. Voir figure 1b.

Comme schématisé notamment sur la figure 2a, une couche intermédiaire I peut être interposée entre ladite couche C et ladite couche barrière B, ladite couche intermédiaire I étant une couche de polyoléfine, et typiquement une couche de PE, d'épaisseur E_{I} allant typiquement de 10 µm à 50 µm, de manière à avoir pour ledit matériau multicouche une structure représentée symboliquement par C/I/B/S ou par C / I / S / B.

En effet, il peut être utile ou nécessaire de fabriquer à part le matériau multicouche I / B / S, la couche I pouvant servir à protéger la couche barrière B et/ou à assurer la liaison avec la couche C.

Selon notamment la nature de ladite couche B, et comme schématisé sur les figures 2b et 2c, une couche d'adhésif Ad peut être interposée entre ladite couche B et ladite couche C ou ladite couche I, ladite couche adhésive Ad ayant typiquement une épaisseur E_{A} inférieure à 5 µm, de manière à avoir pour ledit matériau multicouche une structure représentée symboliquement par C/Ad/B/S ou C/I/Ad/B/S ou C/Ad/S/B ou C/I/Ad/S/B ou C/Ad/ I /B/S ou C/Ad/ I/S/B.

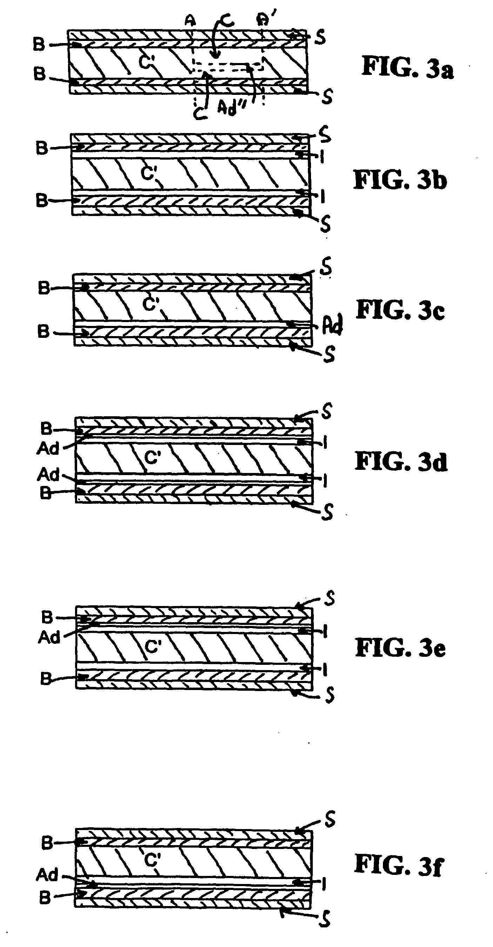

Selon une autre modalité de l'invention illustrée sur les figures 3a à 3f et 6a à 8d, ladite couche C peut être une couche centrale C' formant éventuellement un plan de symétrie pour ledit matériau multicouche, de manière à avoir pour ledit matériau multicouche des structures choisies parmi :
a) S/B/C'/B/S,B/S/C'/S/B,S/B/C'/B/S, comme illustré sur la figure 3a,
b) des structures comprenant au moins une couche intermédiaire I, notamment : S / B / I /C'/I/B/S, B/S/I/C'/I/S/B, S/B/I/C'/I/S/B, S/B/C'/I/B/S, B/S/ C'/I/S/B,S/B/C'/I/S/B, S/B/I/C'/S/B, comme illustré sur la figure 3b,
c) des structures comprenant au moins une couche adhésive Ad, notamment : S / B / Ad /C'/Ad/B/S,B/S/Ad /C'/Ad/S/B, S/B/C'/Ad/B/S, B/S/C'/Ad/S/ B, comme illustré sur la figure 3c,
d) des structures comprenant au moins une couche adhésive Ad et une couche intermédiaire I, notamment : S / B /Ad/I/C'/I/Ad/ B /S, B / S /Ad/I/C'/I/Ad/ S/B,S/B/I/Ad/C'/Ad/I/B/S, B/S/I/Ad/C'/Ad/I/S/B,S/B/I/C'/ I/Ad/B/S, B/S/I/C'/I/Ad/S/B, S/B/I/C'/Ad/I/B/S,B/S/I/C'/Ad / I/S/B, comme illustré sur les figures 3d à 3e.

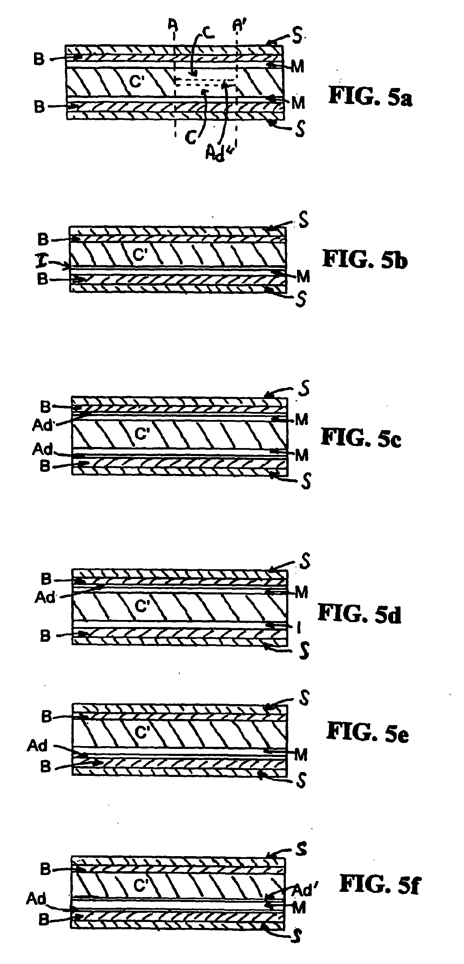

Comme illustré sur les portions des figures 3a et 5a comprises entre les traits en pointillés A et A', ladite couche C' peut être formée par les couches C / Ad" / C, Ad" étant une autre couche adhésive, la couche Ad" et lesdites couches adhésives Ad et Ad' pouvant être formées d'un adhésif de même nature ou d'adhésifs différents quant à leur nature.

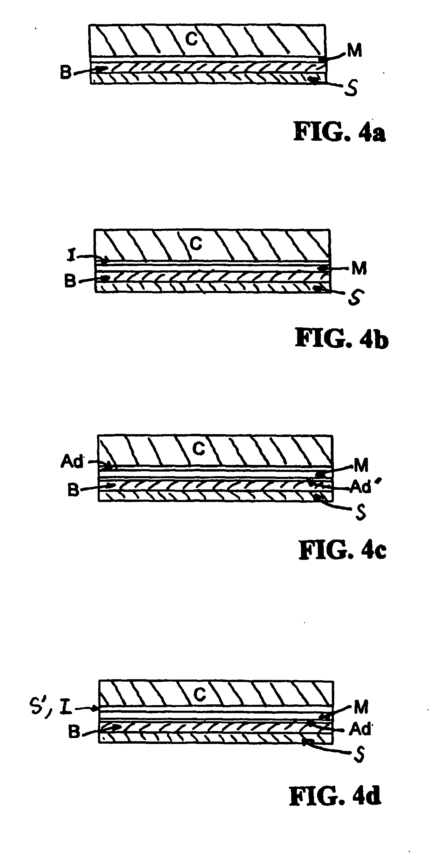

Comme schématisé sur les figures 4a à 6e, ledit joint (1, 1', 1") peut comprendre une couche métallique M, typiquement sous forme d'une feuille métallique M_{F} en Sn ou Al ou sous forme d'une couche de métal M_{D} formée par dépôt métallique sous vide, typiquement une couche de Cr ou d'Al.

Selon une modalité de l'invention, ladite couche métallique M peut être interposée entre ladite couche barrière B et ladite couche C ou ladite couche C', éventuellement grâce à une couche adhésive Ad ou d'une couche adhésive Ad', distincte ou non de ladite couche adhésives Ad, de manière à ce qu'une partie dudit joint comprenne une partie structure multicouche choisie parmi :
a) C ou C' /M/ B / S, C ou C' /M/S/ B, comme illustré sur les figures 4a ou 5a,
b) de parties de structure comprenant une couche intermédiaire I, notamment : C ou C' / I/ M / B / S, C ou C' /I/M/S/B, comme illustré sur les figures 4b ou 5b,
c) des parties de structure comprenant au moins une couche adhésive Ad, notamment : C ou C'/Ad/M/B/S, C ou C'/Ad/M/S/B, C ou C'/Ad'/M/Ad/B/S, C ou C' / Ad' / M / Ad / S / B, comme illustré sur les figures 4c, 5c, 5e et 5f.
d) des parties de structures comprenant au moins une couche intermédiaire I et une couche adhésive Ad et/ou une couche Ad', notamment : C ou C' /I/ M / Ad /B/S, C ou C'/I/Ad / M /B / S, C ou C' /I/ Ad /M / S / B, comme illustré notamment sur les figures 4d et 5d.

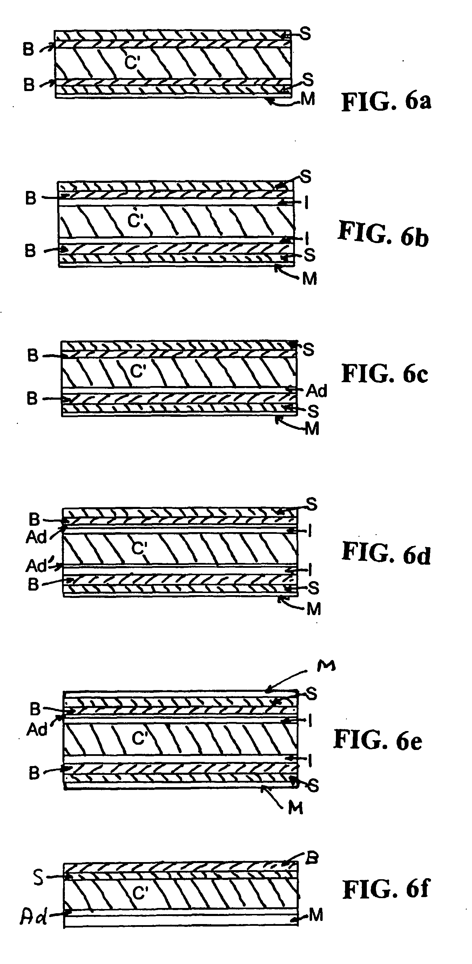

Selon une autre modalité de l'invention, ladite barrière B peut être comprise entre ladite couche métallique M et ladite couche C ou C', éventuellement grâce à une couche adhésive Ad ou d'une couche adhésive Ad', distincte ou non de ladite couche adhésive Ad, de manière à ce qu'une partie dudit joint comprenne une partie de structure multicouche choisie parmi :
a) C ou C' /B/S/M, C ou C'/S/B/ M, comme illustré sur la figure 6a,
b) de parties de structure comprenant une couche intermédiaire I, notamment : C ou C' / I / B / S/ M, C ou C' / I / S / B/ M, comme illustré sur la figure 6b,
c) des parties de structure comprenant une couche adhésive Ad, notamment : C ou C' / Ad / B / S/ M, C ou C' /Ad / S / B/ M, comme illustré sur la figure 6c,
d) des parties de structures comprenant au moins une couche intermédiaire I et une couche adhésive Ad et/ou Ad', notamment : C ou C' / Ad / I / B / S / M, C, C ou C' / I / Ad/B/S/M, C ou C' / Ad / I / S / B / M, CouC'/I/Ad/S/B/MouC'/I/Ad/S / B / Ad' / M, comme illustré sur les figures 6d et 6e.

Quelle que soit la modalité de l'invention, ladite feuille métallique M_{F} peut être formée par une feuille de Sn ou Al, d'épaisseur E_{M} allant de 5 µm à 20 µm, et typiquement une épaisseur de 10 µm.

Ladite couche de métal M_{D} formée par dépôt métallique sous vide peut être une couche de métallisation sous vide d'épaisseur allant de 10 nm à 1000 nm, déposée sur ledit support S ou sur un autre support S', comme illustré sur la figure 4d.

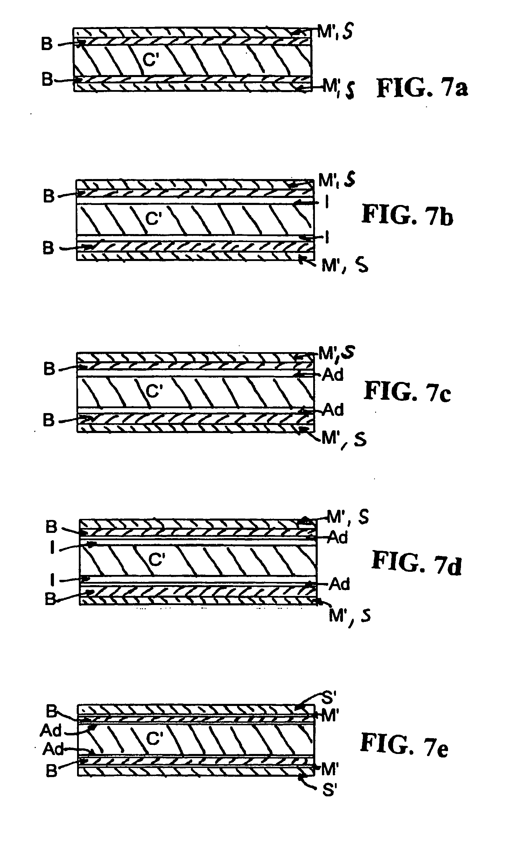

Selon une autre modalité de l'invention illustrée sur les figures 7a à 7e, ladite couche S peut être remplacée par une couche M', ladite couche M' étant choisie parmi une feuille métallique M_{F} en Sn ou Al ou une couche de métal M_{D} formée par dépôt métallique sous vide, typiquement une couche de Cr ou d'Al, sur un film support S', de manière à avoir pour ledit matériau multicouche des structures choisies parmi :
a) M' / B /C' / B / M', B / M' /C' /M' / B, M' / B / C' / B / M', comme illustré sur la figure 7a,
b) des structures comprenant au moins une couche intermédiaire I, notamment : M' / B / I/ C' / I / B / M', B / M' / I / C' / I / M' / B, M' / B / I / C' / I / M' / B, M' / B / C' / I / B / M', B / M' / C' / I / M' / B, M' / B / C' / I / M' / B, M' / B / I / C' / M' / B, comme illustré sur la figure 7b,
c) des structures comprenant au moins une couche adhésive Ad, notamment : M / B / Ad/C'/Ad/B/M',B/M'/Ad / C' / Ad / M' / B, M' / B / C' / Ad / B / M', B / M' / C' / Ad / M' / B, comme illustré sur la figure 7c ou 7e,
d) des structures comprenant au moins une couche adhésive Ad et une couche intermédiaire I, notamment : M' / B / Ad / I / C' / I / Ad / B / M', B / M / Ad / I / C' / I / Ad / M' / B, M' / B / I / Ad / C' / Ad / I / B / M', B / M' / I / Ad / C' / Ad / I / M' / B, M' / B / I / C' / I / Ad / B / M', B / M' / I / C' / I / Ad / M' / B, M' / B / I / C' / Ad / I / B / M', B /M' / I / C' / Ad / I / M' / B, comme illustré sur la figure 7d.

Cependant, ladite couche S peut être remplacée par une couche M', ladite couche M' étant choisie parmi une feuille métallique M_{F} en Sn ou Al ou une couche de métal M_{D} formée par dépôt métallique sous vide, typiquement une couche de Cr ou d'Al, sur un film support S', de manière à ce qu'une partie dudit joint comprenne une partie de ladite structure multicouche choisie parmi :
a) C ou C' / M' / B, C ou C' / B / M', comme illustré sur la figure 7a,
b) de parties de structure comprenant une couche intermédiaire I, notamment : C ou C' / I / M' / B, C ou C' / I / B / M', comme illustré sur la figure 7b,
c) des parties de structure comprenant une couche adhésive Ad, notamment : C ou C' / Ad / M' / B, C ou C' / Ad / B / M', comme illustré sur la figure 7c ou 7e,
d) des parties de structures comprenant au moins une couche adhésive Ad et une couche intermédiaire I, notamment : C ou C' / I / Ad / M' / B, C ou C' / Ad / I / B / M', C, C ou C' / I / Ad / B / M', C ou C' / Ad / I / M' / B, C ou C' / I / Ad / M' / B, comme illustré sur la figure 7d.

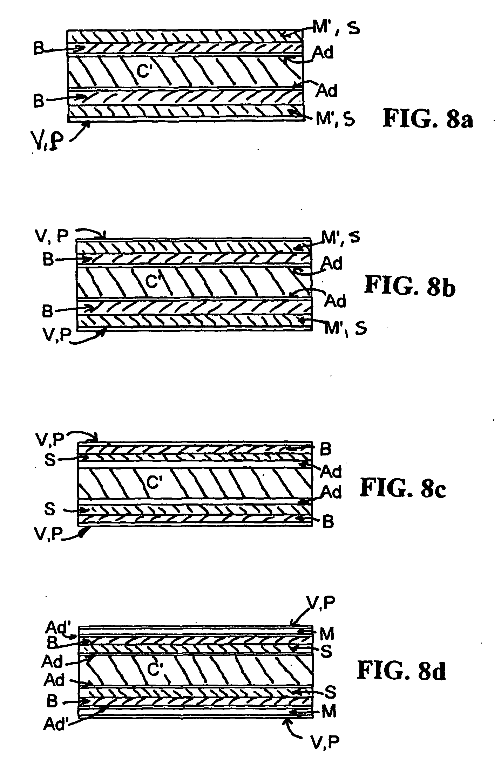

Comme illustré sur les figures 8a à 8d, lorsque ladite couche B ou ladite couche M ou M' est une couche extérieure destinée à être au contact dudit produit alimentaire, ladite couche B ou ladite couche M ou M' peut être recouverte d'une couche d'un vernis V, typiquement un vernis alimentaire, de manière à ce que ledit joint présente une structure comprenant extérieurement par "/ B / V" ou par "/ M (M') / V".

Selon une autre modalité de l'invention, et comme illustré sur les figures 8a à 8d, lorsque ladite couche B ou ladite couche M ou M' est une couche extérieure destinée à être au contact dudit produit alimentaire, ladite couche B ou ladite couche M ou M' peut être recouverte d'une couche protectrice P, typiquement en polyoléfine, éventuellement solidarisée par une couche adhésive Ad"', de manière à ce que ledit joint présente une structure se terminant par "/ B / P" ou par "/ M (M') / P", ou par B / Ad"'/ P" ou par "/ M (M') / Ad"'/ P".

Typiquement, ladite épaisseur Ec de ladite couche C ou de ladite couche C' peut représenter de 70 % à 99 % de l'épaisseur totale E_{J} dudit joint. Voir la figure 1b

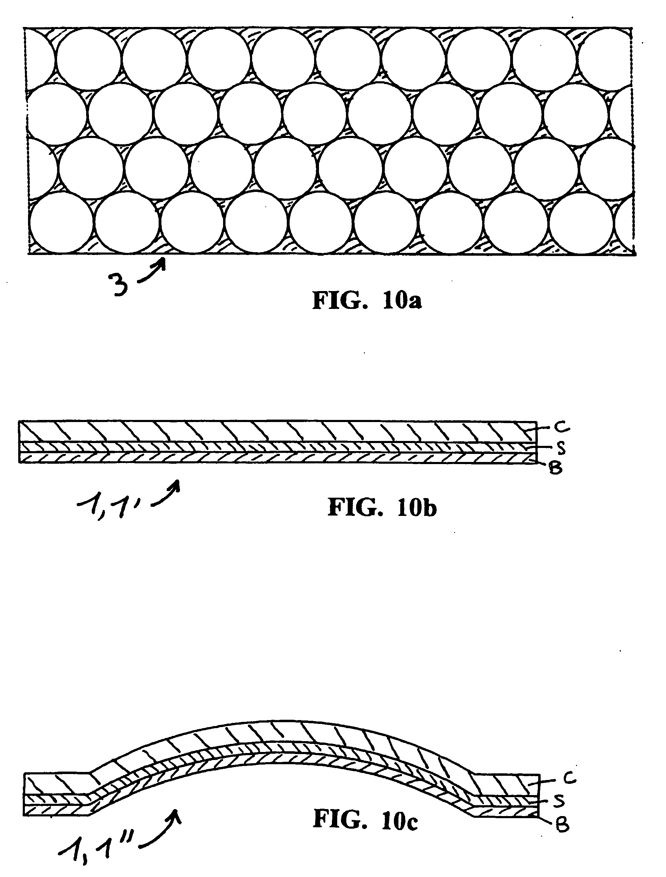

Comme illustré notamment sur la figure 10b, ledit joint (1) peut former un joint plan (1') typiquement obtenu par découpe dudit matériau multicouche en bande ou en format typiquement bidimensionnel.

Cependant, comme illustré sur la figure 10c, ledit joint (1) peut former un joint de forme (1") typiquement obtenu par thermoformage dudit matériau multicouche en bande ou en format bidimensionnel.

Un autre objet de l'invention est constitué par un moyen de bouchage d'un récipient comprenant un joint (1, 1', 1") selon l'invention.

Ce moyen de bouchage peut comprendre une capsule de bouchage (4) dotée d'un joint (1, 1', 1") selon l'invention, ledit récipient étant typiquement une bouteille destinée à contenir, comme produit alimentaire, une boisson alcoolisée, typiquement du vin. Comme illustré sur la figure 1a, ladite capsule de bouchage (4) peut comprendre un insert en matière plastique (40), typiquement fileté, ledit joint (1, 1', 1") étant solidarisé audit insert (40), et une coque extérieure métallique (41), typiquement en Al ou en Sn, ou métalloplastique, ou plastique.

Un autre objet de l'invention est constitué par l'utilisation d'un joint (1, 1', 1") selon l'invention dans un moyen de bouchage d'un récipient, et plus spécialement par cette utilisation dans le cas où ledit récipient est une bouteille destinée à contenir une boisson alcoolisée, typiquement du vin.

Un autre objet de l'invention est constitué par le procédé de fabrication d'un joint selon l'invention.

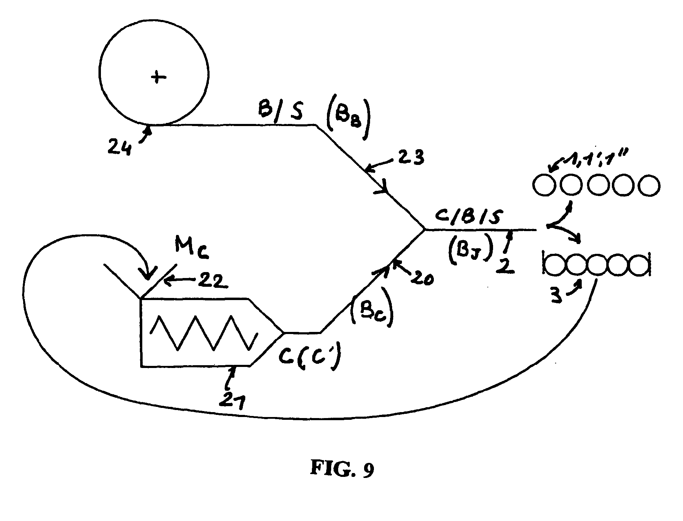

Dans ce procédé, et comme illustré schématiquement sur la figure 9 :
a) on peut approvisionner ou former un élément multicouche B / S ou I / B / S ou I / Ad / B / S ou B / M' selon le cas, sous forme de matériau en bande B_{B},
b) on peut former ladite couche C ou C', typiquement par extrusion dudit matériau M_{C}, en formant une bande B_{C},
c) on peut former une bande B_{J} dudit matériau multicouche en complexant à au moins une face de ladite bande B_{C}, ladite bande B_{B},
d) on peut découper lesdits joints dans ladite bande B_{J} dudit matériau multicouche, en formant un squelette (3) ou des chutes que l'on recycle dans ledit matériau M_{C} destiné à former ladite couche C ou C', de manière à avoir un coût matière faible pour ledit joint. Une portion d'un tel squelette (3) a été représentée sur la figure 10a.

### EXEMPLES DE REALISATION

On a approvisionné des films du commerce de OPP de 20 µm revêtus d'une couche de SiOx allant de 20 nm à 150 nm.

On a également approvisionné des films du commerce de PET de 12 µm revêtus d'une couche de SiOx allant de 20 nm à 150 nm.

Ces films sont des films en bobines de 690 mm de largeur ou laize.

Ainsi, pour l'ensemble des essais, la couche B correspond à une couche de SiOx, et la couche S est soit du PET 12 µm, soit de l'OPP 20 µm.

### A - Fabrication des structures ou films multicouches

### A1. Fabrication de la structure 1 ou C / B / S

On a formé les couches C ou C' en extrudant des couches de PE expansé ou EPE de 690 mm de largeur, de manière à former directement le film ou matériau multicouche EPE / SiOx / PET ou OPP, soit symboliquement C / B / S, le film de B / S adhérant directement sur la couche C en sortie d'extrudeuse avant son refroidissement. Voir figure 1b.

Pour former la structure C / B / S en bande (2), on a utilisé le dispositif schématisé sur la figure 6.

La couche C d'EPE présentait une densité de 0,380 (masse spécifique de 380 kg/m³) et une épaisseur de 1,8 mm.

### A2. Fabrication des structures 2a à 2c

Structure 2a = C / I / B / S (voir figure 2a),
Structure 2b = C / Ad / B / S (voir figure 2b),
Structure 2c = C / I / Ad / B / S (voir figure 2c),
Structure 2d = C / I / Ad / S / B (voir figure 2d)

Comme couche I, on a pris une couche de LDPE de 20 µm d'épaisseur, dans ces essais et généralement dans tous les essais comprenant une couche I.

La couche Ad est une couche d'adhésif pour PE du commerce de 2 µm d'épaisseur.

Pour fabriquer la structure 2a, la couche I a été extrudée entre la couche C et le film B / S.

Pour fabriquer la structure 2b, la face B du film B / S a été revêtue par enduction de la couche d'adhésif Ad avant doublage sur la couche C.

Pour fabriquer la structure 2c, on a formé d'abord la structure I / Ad / B / S en utilisant comme couche I un film de LDPE de même épaisseur (20 µm), puis on a assemblé cette structure à la couche C en sortie d'extrudeuse.

Pour fabriquer la structure 2d, on a revêtu la face S du film B / S par enduction de la couche d'adhésif Ad avant doublage sur la couche C.

### A3. Fabrication des structures 3a à 3f

Structure 3a = S / B / C' / B / S (voir figure 3a),
Structure 3b = S / B / I / C' / I / B / S (voir figure 3b),
Structure 3c = S / B / C' / I / B / S
Structure 3d = S / B / Ad / I / C' / I / Ad / B / S (voir figure 3d)
Structure 3e = S / B Ad / I / C' / I / B / S (voir figure 3e)
Structure 3f = S / B / C' / I / Ad / B / S (voir figure 3f)

La structure 3a a été formée comme la structure 1, en plaçant B / S de part et d'autre de la couche C, devenue C'.

La structure 3b a été formée comme la structure 2a, en plaçant I / B / S de part et d'autre de la couche C, devenue C'.

La structure 3c est une structure mixte qui a été formée en assemblant sur une face de la couche centrale C, l'élément de structure I / B / S comme dans la structure 2b, et en assemblant sur l'autre face S / B comme dans la structure 1, la couche C devenant ensuite la couche C'.

La structure 3d a été formée comme la structure 2c, en plaçant I / Ad / B / S de part et d'autre de la couche C, devenue C'.

### A4. Fabrication des structures 4a à 4d

Structure 4a = C / M / B / S (voir figure 4a)
Structure 4b = C / I / M / B / S (voir figure 4b)
Structure 4c = C / Ad / M / Ad' / B / S (voir figure 4c)
Structure 4d = C / I / M / Ad / B / S (voir figure 4d)
Structure 4e = C / M / Ad / B / S
Structure 4f = C / S' / M / Ad / B / S (voir figure 4d)
Structure 4g = C/ I / M / S / B

Comme couche M, on a utilisé :
- une couche de métallisation par dépôt sous vide d'aluminium de 500 nm d'épaisseur, dans le cas des essais 4a, 4f et 4g, la couche métallique M étant une couche de dépôt sous vide M_{D} formée sur le film B / S dans le cas de l'essai 4a et 4b, sur le support S' (15 µm de PE) dans le cas de l'essai 4f, et sur la couche I dans le cas de l'essai 4g.
- une couche d'étain ou d'aluminium de 6 à 10 µm d'épaisseur formant une feuille M_{F}, pour les autres essais.

La structure 4a a été formée en métallisant sous vide le film B / S pour obtenir la structure M / B / S, puis en l'assemblant à la couche C avant son refroidissement.

Dans le cas de la structure 4b, la structure M / B / S a été assemblée à la couche C avec une couche adhésive Ad' de 2 µm.

La structure 4c a été formée en assemblant une couche de Sn (M) au film B / S et à la couche C grâce à deux couches d'adhésif Ad et Ad', typiquement identiques.

La structure 4d a été formée en assemblant une couche de Sn (M) au film B / S grâce à une couche d'adhésif Ad, la structure M / Ad / B / S étant ensuite assemblée à la couche C avant son refroidissement.

La structure 4e a été formée en complexant la bande métallique M entre la couche C et le film B / S, à l'aide d'une couche d'adhésif Ad.

La structure 4f a été formée en formant le film S' / M par dépôt métallique sous vide, et en le complexant entre la couche C et le film B / S, à l'aide d'une couche d'adhésif.

La structure 4g a été formée en formant le film I / M par dépôt métallique sous vide, et en complexant directement le film I / M entre la couche C et le film S / B.

### A5. Fabrication des structures 5a à 5i

Structure 5a = S / B / M / C' / M / B / S (voir figure 5a),
Structure 5b = S / B / C' I / M / B / S (voir figure 5b)
Structure 5c = S / B / Ad / M / C' / M / Ad / B / S (voir figure 5c)
Structure 5d = S / B / Ad / M / C' / I / B / S (voir figure 5d)
Structure 5e = S / B / C' / M / Ad / B / S (voir figure 5e)
Structure 5f = S / B / C' / Ad' / M / Ad / B / S (voir figure 5f)
Structure 5g = S / B / C' / M / S / B
Structure 5h = B / S / C' / M / S / B
Structure 5i = B / S / M / C' / M / S / B

Cette série de structures est analogue à celle notée 3a à 3f.

La structure 5a a été formée en formant le film S / B / M par dépôt métallique sous vide sur la couche B du film B / S, puis en le plaçant de part et d'autre de la couche C', par complexage à chaud.

La structure 5b est asymétrique et a été formée en coextrudant l'élément C' / I et en assemblant par complexage du film M / B / S de la structure 5a, et du film B / S.

La structure 5c est symétrique et a été formée en complexant de par et d'autre de la couche C', une couche métallique M_{F} (feuille métallique d'Al ou Sn de 6 µm) et le film B / S à l'aide d'une couche d'adhésif Ad. On peut former d'abord l'élément M / Ad / B / S.

La structure 5d est asymétrique et a été formée, en coextrudant l'élément C' / I et en complexant sur une face le film B / S, et la couche métallique M_{F}, un autre film S / B étant assemblé à la couche métallique M_{F} à l'aide d'une couche d'adhésif Ad.

On a aussi formé d'abord l'élément S / B / Ad / M (identique à M / Ad / B / S), que l'on a ensuite complexé sur l'élément C / I coextrudé.

La structure 5e a été formée à partir du film S / B et de la structure M / Ad / B / S (voir structure 5c et 5d), et en extrudant la couche C' entre le film S / B et la structure M /Ad / B/S.

La structure 5f se différencie de la structure 5e par la présence d'une couche d'adhésif Ad' entre la couche C' et l'élément M / Ad / B / S.

La structure 5g est formée à partir du film S / B et de l'élément M / S / B formé par dépôt métallique sous vide d'une couche M_{D} sur la face S du film S / B, par complexage de la couche extrudée C' entre le film S / B et le film M / S / B.

La structure 5h a été formée par complexage de la couche extrudée C' entre le film B / S (= film S / B) et le film M / S / B.

La structure 5i a été formée par complexage de la couche extrudée C' entre les films M / S / B.

### A6. Fabrication des structures 6a à 6f

Structure 6a = S / B / C' / B / S / M
Structure 6b = S / B / I / C' / I / B / S / M
Structure 6c = S / B / C' / Ad / B / S / M
Structure 6d = S / B / Ad / I / C' / Ad' / I / B / S / M
Structure 6e = M / S / B / Ad / I / C' / I / B / S / M
Structure 6f = B / S / C' / Ad / M

Pour fabriquer les structures 6a à 6e, on a d'abord formé l'élément B / S / M en métallisant la face S du film B / S, puis on a procédé d'une manière semblable à celle utilisé pour les structures précédentes analogues.

Pour fabriquer la structure 6f, on a complexé le film B / S sur une face de la couche extrudée C' et on a collé une feuille métallique M sur l'autre face grâce à une couche d'adhésif Ad.

De la même manière, on a formé aussi la structure 6g analogue à la structure 6f : B / S / Ad/C'/Ad/M.

### A7. Fabrication des structures 7a à 7e

Structure 7a = M' / B / C' / B / M' ou S
Structure 7b = M' / B / I / C' / I / B / M' ou S
Structure 7c = M' / B / Ad / C' / Ad / M' ou S
Structure 7d = M' / B / Ad' / I / C / I / Ad / B / M' ou S
Structure 7e = S' / M' / B / Ad / C' / Ad / B / M' / S'

Pour fabriquer ces structures, on forme l'élément M' / B. Pour cela, on a utilisé une couche métallique M' comme support de la couche barrière B, cette couche métallique M' remplaçant la couche support S. Cette couche métallique M' est une feuille métallique en Sn ou Al d'une épaisseur allant de 6 à 10 µm.

Les structures 7a à 7d comprennent de part et d'autre de la couche C', soit le même élément M' / B, soit l'élément M' / B d'un côté de la couche C' et l'élément B / S de l'autre côté de la couche C'.

Dans le cas de la structure 7e, la couche métallique M' est formé par une couche de métallisation M_{D} formée sur un support S' (film PE ou PET de 15 µm).

Pour fabriquer les structures 7a à 7e, on a procédé d'une manière semblable à celle utilisé pour les structures précédentes analogues.

### A8. Fabrication des structures 8a à 8d

Structure 8a = M' / B / Ad / C' / Ad / B / M' / V ou P
Structure 8b = V ou P / M' / B / Ad / C' / Ad / B / M' / V ou P
Structure 8c = V ou P / B / S / Ad /C' / Ad / S / B / V ou P
Structure 8d = V ou P / M / Ad' / B / S / Ad / C' / S / B / Ad' / M / V ou P

Ces structures 8a à 8d ont été fabriquées soit en applicant une couche de vernis V, typiquement à 3 g/m², sur les structures correspondantes, soit en appliquant un film protecteur P, typiquement par calandrage.

### B - Fabrication de joints

Des joints plans (1, 1') ont été obtenus par découpe à l'emporte-pièce dans le matériau multicouche en bande (2) obtenu précédemment.

Dans le cas des joints ronds (1, 1'), il reste un squelette (3) comme illustré sur la figure 10a, squelette qui est typiquement recyclé, comme schématisé sur la figure 9.

Dans le cas d'une structure multi-couche ne comprenant pas une couche d'étain, le squelette (3) obtenu après découpe des joints a été recyclé dans la couche C ou C'.

### C -Résultats obtenus

Ces joints plans (1, 1') présentaient une grande variété de niveau de perméabilité aux gaz et typiquement à l'oxygène ainsi qu'une grande variété d'épaisseur, de manière à avoir des joints appartenant aux différentes classes suivantes :
Classe I : < 5 cm³/m²/j
Classe II : 5-10 cm³/m²/j
Classe III : 10-20 cm³/m²/j
Classe IV : 20-40 cm³/m²/j
Classe V : 40-80 cm³/m²/j

Ces joints ont été placés dans des capsules de bouchage (4) du type de celle illustré sur la figure 1 a.

Ces capsules (4) comprennent typiquement une coque extérieure métallique (41) apte à être sertie sous la bague de verrerie de la bouteille à capsuler, et un insert intérieur (40) en matière plastique, insert (40) qui est typiquement fileté pour coopérer avec le filetage de la bague de verrerie.

Le joint (1, 1') est placé au fond de l'insert (40) et est typiquement retenu par une nervure radiale ou des projections radiales (42) formées à l'intérieure de l'insert (40).

### AVANTAGES DE L'INVENTION

L'invention permet d'obtenir de manière économique une grande variété de joints adaptés à chaque type de vin à conditionner.

L'invention permet ainsi de développer le bouchage à vis pour remplacer l'utilisation de bouchons de liège comme moyen de bouchage traditionnel des bouteilles de vin.

### LISTE DES REPERES

| | | |
|---|---|---|
| JOINT | | 1 |
| JOINT plan | | 1' |
| JOINT de forme (thermoformé) | | 1" |
| MATERIAU MULTICOUCHE | | 2 |
| BANDE DE MATERIAU MULTICOUCHE | | 2' |
| | COUCHE EXTRUDEE "C" | 20 |
| | EXTRUDEUSE | 21 |
| | ALIMENTATION DE 20 | 22 |
| | BANDE DE "B/S" ou B/M' | 23 |
| | BOBINE DE "B/S" ou B/M' | 24 |
| SQUELETTE de 2 recyclé en 22 | | 3 |
| CAPSULE DE BOUCHAGE | | 4 |
| | INSERT FILETE | 40 |
| | COQUE EXTERIEURE | 41 |
| | MOYEN de solidarisation de 1 à 40 | 42 |

## Revendications

1. Joint d'étanchéité (1, 1', 1") en un matériau multicouche (2) destiné à être utilisé dans un moyen de bouchage (4) d'un récipient devant contenir un produit alimentaire, ledit récipient étant typiquement une bouteille destinée à contenir une boisson alcoolisée et ledit moyen de bouchage étant typiquement une capsule de bouchage (1), comprenant une couche C apte à subir une compression axiale résiliente, et une couche B formant barrière à l'oxygène, dans lequel :
a) ladite couche B forme ou comprend un dépôt de matière anorganique,
b) ledit joint (1, 1', 1") comprend une couche S formant un support de ladite couche B, ladite couche support S étant ou non au contact de ladite couche C, de manière à avoir une structure comprenant soit une succession de couches C, B et S, structure représentée symboliquement par C / B / S dans le cas de couches C, B et S adjacentes, la couche S étant alors destinée à être au contact dudit produit alimentaire, soit une succession de couches C, S et B, structure représentée symboliquement par C / S / B dans le cas de couches C, S et B adjacentes, la couche B étant alors destinée à être au contact dudit produit alimentaire,
c) ladite couche C est formée en un matériau M_{C} constitué par ou comprenant une couche de polyoléfine expansée, typiquement de PE expansé ou EPE.

2. Joint selon la revendication 1 dans lequel ledit dépôt de ladite couche barrière B forme ou comprend un dépôt anorganique constitué par un dépôt de SiOₓ.

3. Joint selon une quelconque des revendications 1 à 2 dans lequel ledit dépôt de ladite couche barrière B forme ou comprend un dépôt d'oxyde d'aluminium.

4. Joint selon une quelconque des revendications 1 à 3 dans lequel ledit dépôt de ladite couche barrière B forme ou comprend un dépôt de carbone.

5. Joint selon une quelconque des revendications 1 à 4 dans lequel ladite couche barrière B forme ou comprend une dispersion nanoparticulaire de feuillets exfoliés d'une argile du type phyllosilicate.

6. Joint selon une quelconque des revendications 1 à 5 dans lequel ladite couche barrière B est d'épaisseur choisie ou de teneur choisie en ladite matière anorganique, de manière à avoir un joint de perméabilité à l'oxygène inférieure à 5 cm³/m²/j.

7. Joint selon une quelconque des revendications 1 à 5 dans lequel ladite couche barrière B est d'épaisseur choisie ou de teneur choisie en ladite matière anorganique, de manière à avoir un joint de perméabilité à l'oxygène allant de 5 à 10 cm³/m²/j.

8. Joint selon une quelconque des revendications 1 à 5 dans lequel ladite couche barrière B est d'épaisseur choisie ou de teneur choisie en ladite matière anorganique, de manière à avoir un joint de perméabilité à l'oxygène allant de 10 à 20 cm³/m²/j.

9. Joint selon une quelconque des revendications 1 à 5 dans lequel ladite couche barrière B est d'épaisseur choisie ou de teneur choisie en ladite matière anorganique ou comprendre ladite matière anorganique, de manière à avoir un joint de perméabilité à l'oxygène allant de 20 à 40 cm³/m²/j.

10. Joint selon une quelconque des revendications 1 à 5 dans lequel ladite couche barrière B est d'épaisseur choisie ou de teneur choisie en ladite matière anorganique, de manière à avoir un joint de perméabilité à l'oxygène supérieure à 40 cm³/m²/j et allant typiquement jusqu'à 80 cm³/m²/j.

11. Joint selon une quelconque des revendications 1 à 10 dans lequel ladite couche barrière B a une épaisseur allant de 10 nm à 250 nm quand ladite matière anorganique est choisie parmi un dépôt de SiOₓ, ou un dépôt d'oxyde d'aluminium ou un dépôt de carbone.

12. Joint selon une quelconque des revendications 1 à 10 dans lequel ladite couche barrière B est formée par une dispersion de nanoparticules exfoliées dans une couche de résine ou de matière plastique d'épaisseur allant de 1 µm à 30 µm.

13. Joint selon une quelconque des revendications 1 à 12 dans lequel ladite couche C présente une épaisseur Ec allant typiquement de 0,5 mm à 2,5 mm.

14. Joint selon une quelconque des revendications 1 à 13 dans lequel ladite couche C est constituée par ou comprend une couche de matière thermoplastique de masse spécifique allant de 200 à 500 kg/m³.

15. Joint selon une quelconque des revendications 1 à 14 dans lequel ladite couche C est constituée par ou comprend une couche d'élastomère, typiquement en SEBS ou en silicone.

16. Joint selon une quelconque des revendications 1 à 15 dans lequel ladite couche support S est formée en un matériau M_{S} choisi parmi une polyoléfine, typiquement un PP, un PET, un PA, d'épaisseur E_{S} allant typiquement de 10 µm à 50 µm.

17. Joint selon une quelconque des revendications 1 à 16 dans lequel une couche intermédiaire I est interposée entre ladite couche C et ladite couche barrière B, ladite couche intermédiaire I étant une couche de polyoléfine, et typiquement une couche de PE, d'épaisseur E_{I} allant typiquement de 10 µm à 50 µm, de manière à avoir pour ledit matériau multicouche une structure représentée symboliquement par C / I / B / S ou par C / I / S / B.

18. Joint selon une quelconque des revendications 1 à 17 dans lequel une couche d'adhésif Ad est interposée entre ladite couche B et ladite couche C ou ladite couche I, ladite couche adhésive ayant typiquement une épaisseur E_{A} inférieure à 5 µm, de manière à avoir pour ledit matériau multicouche une structure représentée symboliquement par C / Ad / B / S ou C / I / Ad / B / S ou C / Ad / S / B ou C / I / Ad / S / B ou C / Ad / I / B / S ou C / Ad / I / S / B.

19. Joint selon une quelconque des revendications 1 à 18 dans lequel ladite couche C est une couche centrale C' formant typiquement un plan de symétrie pour ledit matériau multicouche, de manière à avoir pour ledit matériau multicouche des structures choisies parmi :
a) S / B / C' / B / S, B / S / C' / S / B, S / B / C' / B / S,
b) des structures comprenant au moins une couche intermédiaire I, notamment : S / B / I / C' / I / B / S, B / S / I / C' / I / S / B, S / B / I / C' / I / S /B, S / B / C' / I / B / S, B / S / C' / I / S / B, S / B / C' / I / S / B, S / B / I / C' / S / B,
c) des structures comprenant au moins une couche adhésive Ad, notamment : S / B / Ad /C'/Ad/B/S,B/S/Ad / C' / Ad / S / B, S / B / C' / Ad / B / S, B / S / C' / Ad / S / B,
d) des structures comprenant au moins une couche adhésive Ad et une couche intermédiaire I, notamment: S / B / Ad / I / C' / I / Ad / B / S, B/ S / Ad / I / C' / I / Ad / S / B, S / B / I / Ad / C' / Ad / I / B / S, B / S / I / Ad / C' / Ad / I / S / B, S / B / I / C' / I / Ad / B / S, B / S / I / C' / I / Ad / S / B, S / B / I / C' / Ad / I / B / S, B / S / I / C' / Ad / I / S / B.

20. Joint selon une quelconque des revendications 1 à 19 dans lequel ladite couche C' est formée par les couches C / Ad" / C, Ad" étant une autre couche adhésive, ladite couche adhésive Ad" et lesdites couches adhésives Ad et Ad' pouvant être formées d'un adhésif de même nature ou d'adhésifs différents quant à leur nature.

21. Joint selon une quelconque des revendications 1 à 20 comprenant une couche métallique M, typiquement sous forme d'une feuille métallique M_{F} en Sn ou Al ou sous forme d'une couche de métal M_{D} formée par dépôt métallique sous vide, typiquement une couche de Cr ou d'Al.

22. Joint selon la revendication 21 dans lequel ladite couche métallique M est interposée entre ladite couche barrière B et ladite couche C ou ladite couche C', éventuellement grâce à une couche adhésive Ad ou d'une couche adhésive Ad', distincte ou non de ladite couche adhésives Ad, de manière à ce qu'une partie dudit joint comprenne une partie structure multicouche choisie parmi :
a) C ou C' / M / B / S, C ou C' / M / S / B,
b) de parties de structure comprenant une couche intermédiaire I, notamment : C ou C' / I / M / B / S, C ou C' / I / M / S / B,
c) des parties de structure comprenant au moins une couche adhésive Ad, notamment : C ou C' / Ad / M / B / S, C ou C' / Ad / M / S / B, C ou C' / Ad' / M / Ad / B / S, C ou C' / Ad' / M / Ad / S / B,
d) des parties de structures comprenant au moins une couche intermédiaire I et une couche adhésive Ad et/ou une couche Ad', notamment : C ou C' / I / M / Ad / B / S, C ou C' / I / Ad / M / B / S, C ou C' / I / Ad / M / S / B.

23. Joint selon la revendication 21 dans lequel ladite barrière B est comprise entre ladite couche métallique M et ladite couche C ou C', éventuellement grâce à une couche adhésive Ad ou d'une couche adhésive Ad', distincte ou non de ladite couche adhésive Ad, de manière à ce qu'une partie dudit joint comprenne une partie de structure multicouche choisie parmi :
a) C ou C' / B / S / M, C ou C' / S / B / M,
b) de parties de structure comprenant une couche intermédiaire I, notamment : C ou C' / I / B / S / M, C ou C' / I / S / B / M,
c) des parties de structure comprenant une couche adhésive Ad, notamment : C ou C' / Ad/B/S/M,CouC' /Ad/S/B/M,
d) des parties de structures comprenant au moins une couche intermédiaire I et une couche adhésive Ad et/ou Ad', notamment : C ou C' / Ad / I / B / S / M, C, C ou C' / I / Ad/B/S/M, C ou C' / Ad / I / S / B / M, C ou C' / I / Ad / S / B / M ou C' / I / Ad / S / B / Ad' / M.

24. Joint selon une quelconque des revendications 20 à 23 dans lequel ladite feuille métallique M_{F} est formée par une feuille de Sn ou Al, d'épaisseur E_{M} allant de 5 µm à 20 µm, et typiquement une épaisseur de 10 µm.

25. Joint selon une quelconque des revendications 20 à 23 dans lequel ladite couche de métal M_{D} formée par dépôt métallique sous vide est une couche de métallisation sous vide d'épaisseur allant de 10 nm à 1000 nm, déposée sur ledit support S ou sur un autre support S'.

26. Joint selon une quelconque des revendications 1 à 20 dans lequel ladite couche S est remplacée par une couche M', ladite couche M' étant choisie parmi une feuille métallique M_{F} en Sn ou Al ou une couche de métal M_{D} formée par dépôt métallique sous vide, typiquement une couche de Cr ou d'Al, sur un film support S', de manière à avoir pour ledit matériau multicouche des structures choisies parmi :
a) M' / B / C' / B / M', B / M' / C' / M' / B, M' / B / C' / B / M',
b) des structures comprenant au moins une couche intermédiaire I, notamment : M' / B / I / C' / I / B / M', B / M' / I / C' / I / M' / B, M' / B / I / C' / I / M' / B, M' / B / C' / I / B / M', B / M' / C' / I / M' / B, M' / B / C' / I / M' / B, M' / B / I / C' / M' / B,
c) des structures comprenant au moins une couche adhésive Ad, notamment : M / B / Ad / C' / Ad / B/ M', B / M' / Ad / C' / Ad / M' / B, M' / B / C' / Ad / B / M', B / M' / C' / Ad / M' / B,
d) des structures comprenant au moins une couche adhésive Ad et une couche intermédiaire I, notamment : M' / B / Ad / I / C' / I / Ad / B / M', B / M / Ad / I / C' / I / Ad / M' / B, M' / B / I / Ad / C' / Ad / I / B / M', B / M' / I / Ad / C' / Ad / I / M' / B, M' / B / I / C' / I / Ad / B / M', B / M' / I / C' / I / Ad / M' / B, M' / B / I / C' / Ad / I /B/M', B / M' / I / C' / Ad / I / M'/ B.

27. Joint selon une quelconque des revendications 1 à 20 dans lequel ladite couche S est remplacée par une couche M', ladite couche M' étant choisie parmi une feuille métallique M_{F} en Sn ou Al ou une couche de métal M_{D} formée par dépôt métallique sous vide, typiquement une couche de Cr ou d'Al, sur un film support S', de manière à ce qu'une partie dudit joint comprenne une partie de ladite structure multicouche choisie parmi :
a) C ou C' / M' / B, C ou C' / B / M',
b) de parties de structure comprenant une couche intermédiaire I, notamment : C ou C' / I / M' / B, C ou C' / I /B/M',
c) des parties de structure comprenant une couche adhésive Ad, notamment : C ou C' / Ad / M' / B, C ou C' / Ad / B / M',
d) des parties de structures comprenant au moins une couche adhésive Ad et une couche intermédiaire I, notamment : C ou C' / I / Ad / M' / B, C ou C' / Ad / I / B / M', C, C ou C' / I / Ad / B / M', C ou C' / Ad / I / M' / B, C ou C' / I / Ad / M' / B.

28. Joint selon une quelconque des revendications 1 à 27 dans lequel, lorsque ladite couche B ou ladite couche M ou M' est une couche extérieure destinée à être au contact dudit produit alimentaire, ladite couche B ou ladite couche M ou M' est recouverte d'une couche d'un vernis V, typiquement un vernis alimentaire, de manière à ce que ledit joint présente une structure comprenant extérieurement par "/ B / V" ou par "/ M (M') / V".

29. Joint selon une quelconque des revendications 1 à 27 dans lequel, lorsque ladite couche B ou ladite couche M ou M' est une couche extérieure destinée à être au contact dudit produit alimentaire, ladite couche B ou ladite couche M ou M' est recouverte d'une couche protectrice P, typiquement en polyoléfine, éventuellement solidarisée par une couche adhésive Ad"', de manière à ce que ledit joint présente une structure se terminant par "/ B / P" ou par "/ M (M') / P", ou par B / Ad"'/ P" ou par "/ M (M') / Ad"'/ P".

30. Joint selon une quelconque des revendications 1 à 29 dans lequel ladite épaisseur E_{C} de ladite couche C ou de ladite couche C' représente de 70 % à 99 % de l'épaisseur totale E_{J} dudit joint.

31. Joint selon une quelconque des revendications 1 à 30 formant un joint plan (1') typiquement obtenu par découpe dudit matériau multicouche en bande ou en format typiquement bidimensionnel.

32. Joint selon une quelconque des revendications 1 à 30 formant un joint de forme (1") typiquement obtenu par thermoformage dudit matériau multicouche en bande ou en format bidimensionnel (2).

33. Moyen de bouchage d'un récipient comprenant un joint (1, 1', 1") selon une quelconque des revendications 1 à 32.

34. Moyen de bouchage comprenant une capsule de bouchage (4) dotée d'un joint (1, 1', 1 ") selon une quelconque des revendications 1 à 32, ledit récipient étant typiquement une bouteille destinée à contenir, comme produit alimentaire, généralement une boisson alcoolisée, typiquement du vin.

35. Moyen de bouchage selon la revendication 34 dans lequel ladite capsule de bouchage (4) comprend un insert en matière plastique (40), typiquement fileté, ledit joint (1, 1', 1") étant solidarisé audit insert (40), et une coque extérieure (41), typiquement métallique en Al ou en Sn, ou métalloplastique, ou plastique.

36. Utilisation d'un joint selon une quelconque des revendications 1 à 32 dans un moyen de bouchage d'un récipient.

37. Utilisation selon la revendication 36 dans laquelle ledit récipient est une bouteille destinée à contenir une boisson alcoolisée, typiquement du vin.

38. Procédé de fabrication d'un joint selon une quelconque des revendications 1 à 32 dans lequel :
a) on approvisionne ou on forme un élément multicouche B / S ou I / B / S ou I / Ad / B / S ou B / M' selon le cas, sous forme de matériau en bande B_{B},
b) on forme ladite couche C ou C', typiquement par extrusion dudit matériau M_{C}, en formant une bande B_{C},
c) on forme une bande B_{J} dudit matériau multicouche en complexant à au moins une face de ladite bande B_{C}, ladite bande B_{B},
d) on découpe lesdits joints dans ladite bande B_{J} dudit matériau multicouche, en formant un squelette ou des chutes que l'on recycle dans ledit matériau M_{C} destiné à former ladite couche C ou C', de manière à avoir un coût matière faible pour ledit joint.

## Claims

1. Leakproof seal (1, 1', 1") made of a multi-layer material (2) intended to be used in a stopper means (4) for a container intended to contain a food product, said container typically being a bottle intended to contain an alcoholic drink and said stopper means typically being a stopper cap (1), including a layer C able to withstand resilient axial compression, and a layer B forming a barrier to oxygen, wherein:
a) said layer B forms or comprises a coating of non-organic material,
b) said seal (1, 1', 1") comprises a layer S forming a support of said layer B, said support layer S being or not being in contact with said layer C, to give a structure that comprises either a succession of layers C, B and S, a structure represented symbolically as C/B/S in the case of adjacent layers C, B and S, the layer S being intended to be in contact with said food product, or a succession of layers C, S and B, a structure represented symbolically as C/S/B in the case of adjacent layers C, S and B, the layer B being intended to be in contact with said food product,
c) said layer C is formed of a material M_{C} constituted by or comprising a layer of expanded polyolefin, typically expanded PE or EPE.

2. Seal according to claim 1 wherein said coating of said barrier layer B forms or comprises a non-organic coating constituted by a deposition of SiOₓ.

3. Seal according to any one of claims 1 to 2 wherein said coating of said barrier layer B forms or comprises a coating of aluminium oxide.

4. Seal according to any one of claims 1 to 3 wherein said coating of said barrier layer B forms or comprises a coating of carbon.

5. Seal according to any one of claims 1 to 4 wherein said barrier layer B forms or comprises a nano-dispersion of exfoliated platelets of phyllosilicate clay.

6. Seal according to any one of claims 1 to 5 wherein said barrier layer B is of selected thickness or of selected content of said non-organic material, to give a seal with permeability to oxygen of less than 5 cm³/m²/j.

7. Seal according to any one of claims 1 to 5 wherein said barrier layer B is of selected thickness or of selected content of said non-organic material, to give a seal with permeability to oxygen of between 5 and 10 cm³/m²/j.

8. Seal according to any one of claims 1 to 5 wherein said barrier layer B is of selected thickness or of selected content of said non-organic material, to give a seal with permeability to oxygen of between 10 and 20 cm³/m²/j.

9. Seal according to any one of claims 1 to 5 wherein said barrier layer B is of selected thickness or of selected content of said non-organic material, to give a seal with permeability to oxygen of between 20 and 40 cm³/m²/j.

10. Seal according to any one of claims 1 to 5 wherein said barrier layer B is of selected thickness or of selected content of said non-organic material, to give a seal with permeability to oxygen of over 40 cm³/m²/j and typically of up to 80 cm³/m²/j.

11. Seal according to any one of claims 1 to 10 wherein said barrier layer B has a thickness of between 10 nm and 250 nm when said non-organic material is selected from a coating of SiOₓ, or a coating of aluminium oxide or a coating of carbon.

12. Seal according to any one of claims 1 to 10 wherein said barrier layer B is formed by a dispersion of exfoliated nano-particles in a layer of resin or plastic material with a thickness of between 1 µm and 30 µm.

13. Seal according to any one of claims 1 to 12 wherein said layer C has a thickness E_{c} typically between 0.5 mm and 2.5 mm.

14. Seal according to any one of claims 1 to 13 wherein said layer C is constituted by or comprises a layer of thermoplastic material with a density between 200 and 500 kg/m³.

15. Seal according to any one of claims 1 to 14 wherein said layer C is constituted by or comprises a layer of elastomer, typically SEBS or silicon.

16. Seal according to any one of claims 1 to 15 wherein said support layer S is formed out of a material M_{S} selected from a polyolefin, typically a PP, a PET, a PA, of thickness E_{S} typically between 10 µm and 50 µm.

17. Seal according to any one of claims 1 to 16 wherein an intermediate layer I is interposed between said layer C and said barrier layer B, said intermediate layer I being a layer of polyolefin, and typically a layer of PE, of thickness E_{I} typically between 10 µm and 50 µm, to give for said multi-layer material a structure represented symbolically as C/I/B/S or as C/I/S/B.

18. Seal according to any one of claims 1 to 17 wherein a layer of adhesive Ad is interposed between said layer B and said layer C or said layer I, said adhesive layer typically having a thickness E_{A} of less than 5 µm, to give for said multi-layer material a structure represented symbolically as C/Ad/B/S or C/I/Ad/B/S or C/Ad/S/B or C/I/Ad/S/B or C/Ad/I/B/S or C/Ad/I/S/B.

19. Seal according to any one of claims 1 to 18 wherein said layer C is a central layer C' typically forming a plane of symmetry in respect of said multi-layer material, to give for said multi-layer material structures selected from:
a) S/B/C'/B/S,B/S/C'/S/B,S/B/C'/B/S,
b) structures comprising at least one intermediate layer I, in particular: S/B/I/C'/I/B/S,B/S/I/C'/I/S/B, S/B/I/C'/I/S/B,S/B/C'/I/B/S,B/S/C'/I/S/B,S/B/C'/I/S/B, S/B/I/C'/S/B,
c) structures comprising at least one adhesive layer Ad, in particular: S/B/Ad/C'/Ad/B/S, B/S/Ad/C'/Ad/S/B, S/B/C'/Ad/B/S, B/S/C'/Ad/S/B,
d) structures comprising at least one adhesive layer Ad and an intermediate layer I, in particular: S/B/Ad/I/C'/I/Ad/B/S,B/S/Ad/I/C'/I/Ad/S/B,S/B/I/Ad/C'/ Ad/I/B/S,B/S/I/Ad/C'/Ad/I/S/B,S/B/I/C'/I/Ad/B/S,B/S/I/C '/I/Ad/S/B,S/B/I/C'/Ad/I/B/S,B/S/I/C'/Ad/I/S/B.

20. Seal according to any one of claims 1 to 19 wherein said layer C' is formed by the layers C/Ad " /C, Ad" being another adhesive layer, said adhesive layer Ad" and said adhesive layers Ad and Ad' being able to be formed of one adhesive of the same type or of adhesives of different types.

21. Seal according to any one of claims 1 to 20 comprising a metal layer M, typically in the form of a metal film M_{F} of Sn or Al or in the form of a metal layer M_{D} formed by vacuum deposition of metal, typically a layer of Cr or Al.

22. Seal according to claim 21 wherein said metal layer M is interposed between said barrier layer B and said layer C or said layer C', possibly by means of an adhesive layer Ad or an adhesive layer Ad', different or not different from said adhesive layer Ad, in such a way that a part of said seal comprises a multi-layer structure part selected from:
a) C or C'/M/B/S, C or C'/M/S/B,
b) structure parts comprising an intermediate layer I, in particular: C or C'/I/M/B/S,C or C'/I/M/S/B,
c) structure parts comprising at least one adhesive layer Ad, in particular: C or C'/Ad/M/B/S, C or C'/Ad/M/S/B, C or C'/Ad'/M/Ad/B/S, C or C'/Ad'/M/Ad/S/B,
d) structure parts comprising at least one intermediate layer I and an adhesive layer Ad and/or an adhesive layer Ad', in particular: C or C'/I/M/Ad/B/S,C or C'/I/Ad/M/B/S,C or C'/I/Ad/M/S/B.

23. Seal according to claim 21 wherein said barrier B is included between said metal layer M and said layer C or C', possibly by using an adhesive layer Ad or an adhesive layer Ad', different or not different from said adhesive layer Ad, in such a way that a part of said seal comprises a multi-layer structure part selected from:
a) C or C'/B/S/M, C or C'/S/B/M,
b) structure parts comprising an intermediate layer I, in particular: C or C'/I/B/S/M, C or C'/I/S/B/M,
c) structure parts comprising an adhesive layer Ad, in particular: C or C'/Ad/B/S/M, C or C'/Ad/S/B/M,
d) structure parts comprising at least one intermediate layer I and an adhesive layer Ad and/or Ad', in particular: C or C'/Ad/I/B/S/M, C or C'/I/Ad/B/S/M, C or C'/Ad/I/S/B/M, C or C'/I/Ad/S/B/M or C'/I/Ad/S/B/Ad'/M.

24. Seal according to any one of claims 20 to 23 wherein said metal film M_{F} is constituted by a film of Sn or Al, with a thickness E_{M} of between 5 µm and 20 µm, and typically a thickness of 10 µm.

25. Seal according to any one of claims 20 to 23 wherein said metal layer M_{D} formed by vacuum deposition of metal is a vacuum metal plated layer with a thickness of between 10 nm and 1000 nm, deposited on said support S or on another support S'.

26. Seal according to any one of claims 1 to 20 wherein said layer S is replaced by a layer M', said
layer M' being selected from a metal film M_{F} of Sn or Al or a metal layer M_{D} formed by vacuum deposition of metal, typically a layer of Cr or of Al, on a support film S', to give, for said multi-layer material, structures selected from:
a) M'/B/C'/B/M', B/M'/C'/M'/B, M'/B/C'/B/M',
b) structures comprising at least one intermediate layer I, in particular: M'/B/I/C'/I/B/M', B/M'/T/C'/I/M'/B, M'/B/I/C'/I/M'/B, M'/B/C'/I/B/M', B/M'/C'/I/M'/B, M'/B/C'/I/M'/B, M'/B/I/C'/M'/B,
c) structures comprising at least one adhesive layer Ad, in particular: M/B/Ad/C'/Ad/B/M', B/M'/Ad/C'/Ad/M'/B, M'/B/C'/Ad/B/M', B/M'/C'/Ad/M'/B,
d) structures comprising at least one adhesive layer Ad and one intermediate layer I, in particular: M'/B/Ad/I/C'/I/Ad/B/M',B/M/Ad/I/C'/I/Ad/M'/B,M'/B/I/Ad/ C'/Ad/I/B/M',B/M'/I/Ad/C'/Ad/I/M'/B,M'/B/I/C'/I/Ad/B/M' ,B/M'/I/C'/I/Ad/M'/B,M'/B/I/C'/Ad/I/B/M',B/M'/I/C'/Ad/I /M'/B.

27. Seal according to any one of claims 1 to 20 wherein said layer S is replaced by a layer M', said layer M' being selected from a metal film M_{F} of Sn or Al or a metal layer M_{D} formed by vacuum deposition of metal, typically a layer of Cr or Al, on a support film S', in such a way that a part of said seal comprises a part of said multi-layer structure selected from:
a) C or C'/M'/B, C or C'/B/M',
b) structure parts comprising an intermediate layer I, in particular: C or C'/I/M'/B, C or C'/I/B/M',
c) structure parts comprising an adhesive layer Ad, in particular: C or C'/Ad/M'/B, C or C'/Ad/B/M',
d) structure parts comprising at least one adhesive layer Ad and one intermediate layer I, in particular: C or C'/I/Ad/M'/B, C or C'/Ad/I/B/M', C or C'/I/Ad/B/M', C or C'/Ad/I/M'/B,C or C'/I/Ad/M'/B.

28. Seal according to any one of claims 1 to 27 wherein, when said layer B or said layer M or M' is an outer layer intended to be in contact with said food product, said layer B or said layer M or M' is coated with a layer of a varnish V, typically a food varnish, in such a way that said seal has a structure comprising externally "/B/V" or "/M(M')/V".

29. Seal according to any one of claims 1 to 27 wherein, when said layer B or said layer M or M' is an outer layer intended to be in contact with said food product, said layer B or said layer M or M' is coated with a protective layer P, typically of polyolefin, possibly anchored by an adhesive layer Ad"', in such a way that said seal has a structure ending in "/B/P" or in "/M(M')/P", or in B/Ad'''/P'' or in "/M(M')/Ad"'/P".

30. Seal according to any one of claims 1 to 29 wherein said thickness E_{C} of said layer C or of said layer C' represents from 70% to 99% of the total thickness E_{J} of said seal.

31. Seal according to any one of claims 1 to 30 forming a plane seal (1') typically obtained by cutting said multi-layer material in a strip or in a typically two-dimensional format.

32. Seal according to any one of claims 1 to 30 forming a shaped seal (1") typically obtained by thermoforming said multi-layer material in a strip or two-dimensional format (2).

33. Container stopper means comprising a seal (1, 1', 1") according to any one of claims 1 to 32.

34. Stopper means comprising a stopper cap (4) fitted with a seal (1, 1', 1") according to any one of claims 1 to 32, said container typically being a bottle intended to contain, as a food product, an alcoholic drink, typically wine.

35. Stopper means according to claim 34 wherein said stopper cap (4) comprises a typically threaded plastic material insert (40), said seal (1, 1', 1") being anchored to said insert (40), and an outer shell (41) of metal, typically of Al or Sn, or metallised plastic, or plastic.

36. Use of a seal according to any one of claims 1 to 32 in a container stopper means.

37. Use according to claim 36 wherein said container is a bottle intended to contain an alcoholic drink, typically wine.

38. Method for manufacturing a seal according to any one of claims 1 to 32 wherein:
a) a multi-layer component B/S or I/B/S or I/Ad/B/S or B/M' is supplied or formed depending on circumstances, in the form of a strip material B_{B},
b) said layer C or C' is formed, typically by extrusion of said material M_{c}, forming a strip B_{c},
c) a strip B_{J} of said multi-layer material is formed by laminating said strip B_{B} to at least one surface of said strip B_{c},
d) said seals are cut from said strip B_{J} of said multi-layer material, forming a skeleton or offcuts which are recycled in said material M_{c} intended to form said layer C or C', so as to give a low material cost for said seal.

## Patentansprüche

1. Dichtung (1, 1', 1") aus einem Mehrschichtmaterial (2) zur Verwendung in einem Verschlussmittel (4) eines Behälters, der ein Nahrungsmittel enthalten soll, wobei der Behälter typischerweise eine Flasche zur Aufnahme eines alkoholischen Getränkes und das Verschlussmittel typischerweise eine Verschlusskappe (1) ist, umfassend eine Schicht C, die in Axialrichtung elastisch komprimierbar ist, und eine Schicht B, die eine Barriere gegen Sauerstoff bildet, wobei:
a) die Schicht B einen Belag aus anorganischem Material bildet oder aufweist,
b) die Dichtung (1, 1', 1") eine Schicht S aufweist, die einen Träger für die Schicht B bildet, wobei die Trägerschicht S mit der Schicht C in Kontakt steht oder nicht, so dass sich eine Struktur ergibt, die entweder aus einer Schichtenfolge C, B und S besteht, Struktur, die bei aneinander grenzenden Schichten C, B und S symbolisch dargestellt ist durch C / B / S, wobei dann die Schicht S mit dem Nahrungsmittel in Kontakt stehen soll, oder aus einer Schichtenfolge C, S und B, Struktur, die bei aneinander grenzenden Schichten C, S und B symbolisch dargestellt ist durch C / S / B, wobei dann die Schicht B mit dem Nahrungsmittel in Kontakt stehen soll,
c) die Schicht C aus einem Material M_{c} gebildet ist, das aus einer Schicht aus expandiertem Polyolefin, typischerweise expandiertem Polyethylen oder EPE besteht oder eine solche aufweist.

2. Dichtung nach Anspruch 1, wobei der Belag der Barriereschicht B einen anorganischen Belag bildet oder aufweist, der aus einem SiOₓ-Belag besteht.

3. Dichtung nach irgendeinem der Ansprüche 1 bis 2, wobei der Belag der Barriereschicht B einen Aluminiumoxid-Belag bildet oder aufweist

4. Dichtung nach irgendeinem der Ansprüche 1 bis 3, wobei der Belag der Barriereschicht B einen Kohlenstoff-Belag bildet oder aufweist.

5. Dichtung nach irgendeinem der Ansprüche 1 bis 4, wobei die Barriereschicht B eine Nanopartikeldispersion exfolierter Blättchen eines Tons vom Typ Phyllosilikat bildet oder aufweist.

6. Dichtung nach irgendeinem der Ansprüche 1 bis 5, wobei die Barriereschicht B eine so gewählte Dicke oder einen so gewählten Gehalt an anorganischem Material hat, dass sich eine Dichtung mit einer Sauerstoffdurchlässigkeit von weniger als 5 cm³/m²/Tag ergibt.

7. Dichtung nach irgendeinem der Ansprüche 1 bis 5, wobei die Barriereschicht B eine so gewählte Dicke oder einen so gewählten Gehalt an anorganischem Material hat, dass sich eine Dichtung mit einer Sauerstoffdurchlässigkeit von 5 bis 10 cm³/m²/Tag ergibt.

8. Dichtung nach irgendeinem der Ansprüche 1 bis 5, wobei die Barriereschicht B eine so gewählte Dicke oder einen so gewählten Gehalt an anorganischem Material hat, dass sich eine Dichtung mit einer Sauerstoffdurchlässigkeit von 10 bis 20 cm³/m²/Tag ergibt.

9. Dichtung nach irgendeinem der Ansprüche 1 bis 5, wobei die Barriereschicht B eine so gewählte Dicke oder einen so gewählten Gehalt an anorganischem Material hat, dass sich eine Dichtung mit einer Sauerstoffdurchlässigkeit von 20 bis 40 cm³/m²/Tag ergibt.

10. Dichtung nach irgendeinem der Ansprüche 1 bis 5, wobei die Barriereschicht B eine so gewählte Dicke oder einen so gewählten Gehalt an anorganischem Material hat, dass sich eine Dichtung mit einer Sauerstoffdurchlässigkeit von mehr als 40 cm³/m²/Tag und typischerweise bis zu 80 cm³/m²/Tag ergibt.

11. Dichtung nach irgendeinem der Ansprüche 1 bis 10, wobei die Barriereschicht B eine Dicke von 10 nm bis 250 nm hat, wenn das anorganische Material unter einem SiOₓ-Belag oder einem Aluminiumoxid-Belag oder einem Kohlenstoff-Belag ausgewählt wird.

12. Dichtung nach irgendeinem der Ansprüche 1 bis 10, wobei die Barriereschicht B durch eine Dispersion exfolierter Nanopartikel in einer Harz- oder Kunststoffschicht von 1 µm bis 30 µm Dicke gebildet ist.

13. Dichtung nach irgendeinem der Ansprüche 1 bis 12, wobei die Schicht C eine Dicke E_{c} von typischerweise 0,5 mm bis 2,5 mm aufweist.

14. Dichtung nach irgendeinem der Ansprüche 1 bis 13, wobei die Schicht C aus einer Schicht aus thermoplastischem Material mit einer spezifischen Masse von 200 bis 500 kg/m³ besteht oder eine solche aufweist.

15. Dichtung nach irgendeinem der Ansprüche 1 bis 14, wobei die Schicht C aus einer Elastomerschicht, typischerweise aus SEBS oder Silicon besteht oder eine solche aufweist.

16. Dichtung nach irgendeinem der Ansprüche 1 bis 15, wobei die Trägerschicht S aus einem unter einem Polyolefin ausgewählten Material Mₛ, typischerweise PP, PET, PA, von 10 µm bis 50 µm Dicke gebildet ist.

17. Dichtung nach irgendeinem der Ansprüche 1 bis 16, wobei zwischen der Schicht C und der Barriereschicht B eine Zwischenschicht I eingefügt ist, wobei die Zwischenschicht I eine Polyolefinschicht, typischerweise eine PE-Schicht, von 10 µm bis 50 µm Dicke ist, so dass sich für das Mehrschichtmaterial eine Struktur ergibt, die symbolisch dargestellt ist durch C / I / B / S oder C / I / S / B.

18. Dichtung nach irgendeinem der Ansprüche 1 bis 17, wobei zwischen der Schicht B und der Schicht C oder der Schicht I eine Klebeschicht Ad eingefügt ist, wobei die Klebeschicht typischerweise eine Dicke E_{A} von weniger als 5 µm hat, so dass sich für das Mehrschichtmaterial eine Struktur ergibt, die symbolisch dargestellt ist durch C / Ad / B / S oder C / I / Ad / B / S oder C / Ad / S / B oder C / I / Ad / S / B oder C / Ad I / B / S oder C / Ad I / S / B.

19. Dichtung nach irgendeinem der Ansprüche 1 bis 18, wobei die Schicht C eine Zentralschicht C' ist, die typischerweise eine Symmetrieebene für das Mehrschichtmaterial bildet, so dass sich für das Mehrschichtmaterial Strukturen ergeben, ausgewählt unter:
a) S/B/C'/B/S, B/S/C'/S/B, S/B/C'/B/S;
b) Strukturen mit mindestens einer Zwischenschicht I, insbesondere: S / B / I / C'/I/B/S, B/S/I/C'/I/S/B, S/B/I/C'/I/S/B, S/B/C'/I/B/S, B /S/C'/I/S/B, S/B/C'/I/S/B, S/B/I/C'/S/B,
c) Strukturen mit mindestens einer Klebeschicht Ad, insbesondere: S / B / Ad / C'/Ad/B/S, B/S/Ad/C'/Ad/S/B, S/B/C'/ Ad/B/S, B/S/C'/Ad/ S/B,
d) Strukturen mit mindestens einer Klebeschicht Ad und einer Zwischenschicht I, insbesondere:S/B/Ad/I/C'/I/Ad/B/S, B/S/Ad/I/C'/I/Ad/S/B, S/B/I/Ad/C'/ Ad/I/B/S, B/S/I/Ad/C'/Ad/I/S/ B, S/B/I/C'/I/ Ad/B/S, B/S/I/C'/I/Ad/S/B, S/B/I/C'/Ad/I/B/S, B/S/I/C'/ Ad/I/S/B.

20. Dichtung nach irgendeinem der Ansprüche 1 bis 19, wobei die Schicht C' durch die Schichten C / Ad" / C gebildet ist, wobei Ad" eine weitere Klebeschicht ist, wobei die Klebeschicht Ad" und die Klebeschichten Ad und Ad' aus einem Klebstoff gleicher Art oder aus unterschiedlichen Klebstoffen hinsichtlich ihrer Art bestehen können.

21. Dichtung nach irgendeinem der Ansprüche 1 bis 20, umfassend eine metallische Schicht M, typischerweise in Form einer Metallfolie M_{F} aus Sn oder Al, oder in Form einer durch Metallabscheidung unter Vakuum gebildeten Metallschicht M_{D}, insbesondere einer Cr- oder Al-Schicht.

22. Dichtung nach Anspruch 21, wobei die Metallschicht M zwischen der Barriereschicht B und der Schicht C oder Schicht C' eingefügt ist, eventuell mittels einer Klebeschicht Ad oder einer sich von der Klebeschicht Ad unterscheidenden oder nicht unterscheidenden Klebeschicht Ad', so dass ein Teil der Dichtung einen Teil der Mehrschichtstruktur aufweist, ausgewählt unter:
a) CoderC'/M/B/S/, CoderC'/M/S/B,
b) Strukturteilen mit einer Zwischenschicht I, insbesondere: C oder C' / I / M / B /S, CoderC'/I/M/S/B,
c) Strukturteilen mit mindestens einer Klebeschicht Ad, insbesondere: C oder C'/Ad/M/B/S, CoderC'/Ad/M/S/B, CoderC'/Ad'/M/Ad/B/S, C oderC'/Ad'/M/Ad/S/B,
d) Strukturteilen mit mindestens einer Zwischenschicht I und einer Klebeschicht Ad und/oder einer Schicht Ad', insbesondere: C oder C' / I / M / Ad / B / S, CoderC'/I/Ad/M/B/S, CoderC'/I/Ad/M/S/B.

23. Dichtung nach Anspruch 21, wobei die Barriereschicht B zwischen der Metallschicht M und der Schicht C oder C' angeordnet ist, eventuell mittels einer Klebeschicht Ad oder einer sich von der Klebeschicht Ad unterscheidenden oder nicht unterscheidenden Klebeschicht Ad', so dass ein Teil der Dichtung einen Teil der Mehrschichtstruktur aufweist, ausgewählt unter:
a) CoderC'/B/S/M/, CoderC'/S/B/M,
b) Strukturteilen mit einer Zwischenschicht I, insbesondere: C oder C' / I / B / S /M, CoderC'/I/S/B/M,
c) Strukturteilen mit einer Klebeschicht Ad, insbesondere: C oder C' / Ad / B / S /M, CoderC'/Ad/S/B/M,
d) Strukturteilen mit mindestens einer Zwischenschicht I und einer Klebeschicht Ad und/oder Ad', insbesondere: C oder C' / Ad / I / B / S / M, C oder C'/I/Ad/B/S/M, CoderC'/Ad/I/S/B/M, CoderC'/I/Ad/S/B /M, CoderC'/I/Ad/S/B/Ad'/M.

24. Dichtung nach irgendeinem der Ansprüche 20 bis 23, wobei die Metallfolie M_{F} durch eine Sn- oder Al-Folie gebildet ist, die eine Dicke von 5 µm bis 20 µm und typischerweise eine Dicke von 10 µm hat.

25. Dichtung nach irgendeinem der Ansprüche 20 bis 23, wobei die durch Metallabscheidung unter Vakuum gebildete Metallschicht M_{D} eine im Vakuum auf den Träger S oder einen weiteren Träger S' aufgedampfte Metallschicht von 10 nm bis 1000 nm Dicke ist.

26. Dichtung nach irgendeinem der Ansprüche 1 bis 20, wobei die Schicht S durch eine Schicht M' ersetzt ist, wobei die Schicht M' ausgewählt ist unter einer Metallfolie M_{F} aus Sn oder Al oder einer durch Metallabscheidung unter Vakuum gebildeten Metallschicht M_{D}, typischerweise einer Cr- oder Al-Schicht, auf einem Trägerfilm S', so dass sich für das Mehrschichtmaterial Strukturen ergeben, ausgewählt unter:
a) M'/B/C'/B/M', B/M'/C'/M'/B, M'/B/C'/B/M',
b) Strukturen mit mindestens einer Zwischenschicht I, insbesondere: M' / B / I / C'/I/B/M', B/M'/I/C'/I/M'/B, M'/B/I/C'/I/M'/B, M'/B/C'/I/B/ M', B/M'/C'/I/M'/B, M'/B/C'/I/M'/B, M'/B/I/C'/M'/B,
c) Strukturen mit mindestens einer Klebeschicht Ad, insbesondere: M / B / Ad / C'/Ad/B/M', B/M'/Ad/C'/Ad/M'/B, M'/B/C'/ Ad/B/M', B/M'/C'/ Ad/M'/B,
d) Strukturen mit mindestens einer Klebeschicht Ad und einer Zwischenschicht I,insbesondere:M'/B/Ad/I/C'/I/Ad/B/M', B/M/Ad/I/C'/I/Ad/M'/ B, M'/B/I/Ad/C'/ Ad/I/B/M', B/M'/I/Ad/C'/Ad/I/M'/ B, M'/B/I /C'/I/Ad/B/M', B/M'/I/C'/I/Ad/M'/B, M'/B/I/C'/Ad/I/B/M', B /M'/I/C'/Ad/I/M'/B.

27. Dichtung nach irgendeinem der Ansprüche 1 bis 20, wobei die Schicht S durch eine Schicht M' ersetzt ist, wobei die Schicht M' ausgewählt ist unter einer Metallfolie M_{F} aus Sn oder Al oder einer durch Metallabscheidung unter Vakuum gebildeten Metallschicht M_{D}, typischerweise einer Cr- oder Al-Schicht, auf einem Trägerfilm S', so dass ein Teil der Dichtung einen Teil der Mehrschichtstruktur aufweist, ausgewählt unter:
a) CoderC'/M'/B, C oder C'/B/M',
b) Strukturteilen mit einer Zwischenschicht I, insbesondere: C oder C' / I/M' / B, CoderC'/I/B/M',
c) Strukturteilen mit einer Klebeschicht Ad, insbesondere: C oder C' / Ad / M' / B, CoderC'/Ad/B/M',
d) Strukturteilen mit mindestens einer Klebeschicht Ad und einer Zwischenschicht I, insbesondere: C oder C' / I / Ad / M' / B, C oder C' / Ad / I / B /M', CoderC'/I/Ad/ B/M', Coder C'/Ad/I/M'/B, Coder C'/I/Ad/M' / B.

28. Dichtung nach irgendeinem der Ansprüche 1 bis 27, wobei, wenn die Schicht B oder die Schicht M oder M' eine äußere Schicht ist, die mit dem Nahrungsmittel in Kontakt stehen soll, die Schicht B oder die Schicht M oder M' mit einer Lackschicht aus einem Lack V, typischerweise einem Nahrungsmittellack überzogen ist, so dass die Dichtung eine Struktur aufweist, die außen aus "/ B / V" oder "/ M (M') / V" besteht.

29. Dichtung nach irgendeinem der Ansprüche 1 bis 27, wobei, wenn die Schicht B oder die Schicht M oder M' eine äußere Schicht ist, die mit dem Nahrungsmittel in Kontakt stehen soll, die Schicht B oder die Schicht M oder M' mit einer Schutzschicht P typischerweise aus Polyolefin überzogen ist, die eventuell mit einer Klebeschicht AD"' befestigt ist, so dass die Dichtung eine Struktur aufweist, die mit "/ B / P" oder "/ M (M') / P" bzw. mit "/ B / Ad"' / P" oder "/ M (M') / Ad"' / P" endet.

30. Dichtung nach irgendeinem der Ansprüche 1 bis 29, wobei die Dicke E_{c} der Schicht C oder der Schicht C' 70 % bis 99 % der Gesamtdicke E_{J} der Dichtung ausmacht.

31. Dichtung nach irgendeinem der Ansprüche 1 bis 30, die eine Flachdichtung (1') bildet, welche typischerweise durch Ausstanzen eines Bandes oder eines typischerweise zweidimensionalen Formats aus dem Mehrschichtmaterial erhalten wird.

32. Dichtung nach irgendeinem der Ansprüche 1 bis 30, die eine Formdichtung (1") bildet, welche typischerweise durch Thermoformen des Mehrschichtmaterials zu einem Band oder einem zweidimensionalen Format erhalten wird.

33. Verschlussmittel für einen Behälter, umfassend eine Dichtung (1, 1', 1") nach irgendeinem der Ansprüche 1 bis 32.

34. Verschlussmittel umfassend eine Verschlusskappe (4) mit einer Dichtung (1, 1', 1") nach irgendeinem der Ansprüche 1 bis 32, wobei der Behälter typischerweise eine Flasche ist, die als Nahrungsmittel im Allgemeinen ein alkoholisches Getränk enthalten soll, typischerweise Wein.

35. Verschlussmittel nach Anspruch 34, bei dem die Verschlusskappe (4) einen typischerweise mit einem Gewinde versehenen Kunststoffeinsatz (40) aufweist, wobei die Dichtung (1, 1', 1 ") an dem Einsatz (40) festgelegt ist, und eine typischerweise metallische Außenschale (41) aus Al oder Sn bzw. aus Metall/Plastik oder Kunststoff aufweist.

36. Verwendung einer Dichtung nach irgendeinem der Ansprüche 1 bis 32 in einem Verschlussmittel eines Behälters.

37. Verwendung nach Anspruch 36, wobei der Behälter eine Flasche ist, die ein alkoholisches Getränk enthalten soll, typischerweise Wein.

38. Verfahren zur Herstellung einer Dichtung nach irgendeinem der Ansprüche 1 bis 32, wobei:
a) je nach Fall ein Mehrschichtelement B / S oder I/B/S oder I/Ad / B / S oder B / M' in Form von Bandmaterial B_{B} bereitgestellt oder gebildet wird,
b) die Schicht C oder C' gebildet wird, typischerweise durch Strangpressen des Materials M_{c}, wobei ein Band B_{c} entsteht,
c) ein Band B_{J} aus dem genannten Mehrschichtmaterial gebildet wird, indem das Band B_{B} mit mindestens einer Seite des Bandes B_{C} verbunden wird,
d) aus dem Band B_{J} aus dem genannten Mehrschichtmaterial die Dichtungen ausgestanzt werden, wobei ein Skelett oder Abfall entsteht, der in dem Material M_{C} zur Bildung der Schicht C oder C' wiederverwendet wird, so dass die Materialkosten für die Dichtung gering sind.
